# EUROPEAN PATENT APPLICATION

(11) **EP 1 918 264 A2**
(43) Date of publication of application: **07.05.2008**
(21) Application number: 07254342.4
(22) Date of filing: 02.11.2007
(51) Int. Cl.: C04B 35/634, C04B 35/117, C04B 35/628, C04B 35/632

(54) **Method of synthesising a nano metric composite and for use thereof in a method for producing a ceramic component**

(30) Priority: 06.11.2006 GB 0622074
(71) Applicant: Howmedica Osteonics Corp., Mahwah, NJ 07430 (US); The Ecole Nationale Superieure de Ceramique Industrielle, 87065 Limoges Cedex (FR); Centre National de la Recherche Scientifique, 75794 Paris Cedex 16 (FR)
(72) Inventor: Rossignol, Fabrice, 87340 Verneuil sur Vienne (FR); Chartier, Thierry, 87220 Feytiat (FR); Zhang, Wen, 87100 Limoges (FR); Pagnoux, Cecile, 87100 Limoges (FR); Cueille, Christophe, 14210 Missy (FR); Sun Wai, Adrian, Limerick (IE)
(74) Representative: Bridge-Butler, Alan James

(57) **Abstract**

A method of synthesising a nano metric composite which has a core and shell structure and which includes preparing isometric metal oxide cores with an average diameter of less than 100 nm by a growth process via a liquid route, applying a double surfactant method which includes a first surfactant to obtain mono dispersal of the metal oxide cores and then using a second surfactant to prepare the surface of the metal oxide cores and grafting a shell on each of said cores

## Description

This invention relates to a process of synthesising a nano metric composite and for use thereof in a method of producing a ceramic component.

In order to prevent abnormal grain growth and/or help densification whilst sintering a powder compact made of an alumina based ceramic, for example by the method set forth in EP 1529 764 which describes a method using a dispersion of alpha-alumina powder, it is common to input a few wt.0/00 of additives. A typical and non-exhaustive list of possible additives is calcite (CaCO₃), magnesia (MgO), silica (SiO₂), zirconia (ZrO₂), yittria (Y₂O₃). These sintering additives are usually introduced as nanoparticles for practical reasons, as well as to get homogeneous distributions through the volume of the materials.

In the specific case where the backbone of the fabrication process is the DCC shaping method described in EP 1529 764, the adaptation of the surface chemistry of the nanoparticles of additives becomes a key parameter. Indeed, highly concentrated suspensions used for DCC can easily be destabilized by any change of pH and/or ionic strength due to the introduction of the nanoparticles of additives. The adaptation of the surface chemistry is obtained by embedding the nanoparticles of additives hereinafter referred to as the cores, into shells having a different composition.

The final size of the core-shell particles should remain in the nanometre range, and, depending on its composition, the shell may also contribute as an additive for sintering.

According to the present invention a method of synthesising a nano metric composite which has a core and shell structure includes preparing isometric metal oxide cores with an average diameter of less than 100 nm by a growth process via a liquid route, applying a double surfactant method which includes a first surfactant to obtain monodispersal of the oxide cores and then using a second surfactant to prepare the surface of the metal oxide cores and finally grafting a shell on each of said cores.

Preferably the he CaCO₃-SIO₂ nanoparticles are synthesized by a heterogeneous nucleation and growth process. Silica is chosen as the shell material because of the ease with which it can be formed and controlled and the possibility to functionalize it by a variety of organic and/or inorganic molecules. In addition, silica is non-coagulating in nature over a wide range of pH (IsoElectric Point of silica around pH2). The silica shells are formed on the surface of core particles upon a well-known Stöber process which involves in a controlled hydrolysis and poly-condensation of tetraethylorthosilicate (TEOS) in a mixed solution of water, ammonia and ethanol.

The thickness of these silica shells can be easily controlled, for instance, by changing TEOS concentration, in order to obtain a suitable CA:Si molar ratio for the specific application of these core-shell nanoparticles.

The advantages of the synthesis method, as described above, are :
the easy control of the shell thickness allows the atomic ratio between the different elements further used in combination as sintering additives to be precisely adjusted,
because of the use of the double surfactant method, the aggregation of assynthesized core-shell nonparticles is limited (i.e. quasi monodisperse), their morphology remains close to that of a sphere (i.e. a smooth and uniform silica shell is formed) and the cohesion between the core and the shell is high (i.e. good stability in colloidal suspensions),
the method provides sufficient amount of core-shell nanoparticles necessary to use them in the frame of an industrial process of mass production like the production of ceramic implants for hip arthroplasty,
the use of TEOS, instead of sodium silicate that has already been described in the literature, also eliminates Na impurities that are known to promote abnormal grain growth during sintering.

In addition to the Na impurities that could be introduced by the silica precursor used to synthesize the shell of the core-shell nanoparticles of additives, Na may also come from the use of PBTCA-Na dispersant for the preparation of the concentrated alumina suspensions necessary in the frame of the DCC shaping process described in EP 1529 764. In that case, the Na counterion of PBTCA can eventually be replaced by a NH₄ counterion. PBTCA-NH₄ remains suitable for each step of the DCC process including dispersion, coagulation and sintering. The optimum quantity of PBTCA-HN₄ dispersant has been determined to be equivalent to that of PBTCA-Na: 10⁻⁶ mol of dispersant per square meter of alumina powder surface.

The calcite/silica shell nanoparticles synthesised by the process set forth above can be used as sintering additives for ceramics such as alumina based material.

Thus, the invention also includes a method of producing a ceramic component which includes synthesising a nanometric composite which has a core and shell structure and which includes preparing isometric oxide cores with an average diameter of less than 100 nm by a growth process via a liquid route, applying a double surfactant method which includes a first surfactant to obtain mono dispersal of the oxide cores and then using a second surfactant to prepare the surface of the oxide cores and grafting a shell on each of said cores dispersing the coated oxide cores in water with alpha-alumina powder, using 2-phosphonobutane-1,2,4-tricarboxylic acid (PBTC) or 4,5-Dihydroxy-m-benzenedisulfonic Acid, Disodium Salt (Tiron^{™}) as dispersant, shifting the pH towards the isoelectric point (IEP) by adding a mixture of acetic anhydride and ethylene glycol, or polyethylene glycol, drying in a controlled atmosphere (humidity, temperature) and sintering the three-dimensional structure thus formed.

If desired a post compacting using cold isostatic pressing can be provided prior to sintering.

A method in which the metal oxide cores are calcite includes preparing isometric calcite cores via the liquid route and which includes a heterogeneous nucleation growth process in a Ca(OH)2 - H₂O - CO₂ reaction system, and using polyacrylic acid (PAA) as a first surfactant to obtain monodispersal of the calcite nano particles; using polyvinylpyrrolidone (PVP) as a second surfactant, to improve the affinity between the core and the shell and then forming thin and homogeneous silica coatings on the calcite cores by the controlled hydrolysis and poly-condensation of tetraethylorthosilicate (TEOS) in a mixed solution of water, ammonia and ethanol, to form a shell on the core.

In the above methods the average diameter of the oxide core is preferably less than 50 nm, and can have an average diameter down to 20 nm.

In the method which is used to make a ceramic component the alpha-alumina particle diameter can be between 100 nm and 5 µm.

By using PBTC as an electrostatic dispersant for alumina nanopowders the repulsive negative charges at the alumina surface are the result of the ionised carboxylic and phosphonate groups of the grafted PBTC molecules. The time-delayed coagulation is achieved by shifting the pH towards the IEP when adding the acetic anhydride that transforms into acetic acid at the contact with water. The acetic anhydride is introduced with ethylene glycol as co-solvent to increase its miscibility in water and thus get an homogeneous coagulation, ethylene glycol also generates a lubricant effect which is beneficial to the cold isostatic pressing.

The powder is preferably an oxide powder with a metal cation, able to exhibit a strong adsorption of PBTC molecules (e.g. alumina nanopowders). The solvent can be water based, for example demineralised, high purity and/or sterile water.

The core-shell nanoparticles to be used as sintering additives are first introduced in a water based solvent.

The elaboration of the concentrated suspension (i.e. solid loading over 55 vol.%) is achieved by first dissolving the PBTC (i.e. about 1 ppm of PBTC mol per m² of oxide powder surface) into the aforementioned solvent and after the powder is added. It is possible to add the powder in several stages, with an ultrasonic (US) treatment between each addition stage.

In order to achieve dispersion, a deagglomeration and/or milling treatments (for example ball milling, attrition milling) are used and it is also possible to add a binder after dispersion. A de-aeration stage under vacuum (<50 mbar) is carried out to remove air bubbles that exist in the suspension after US treatments.

A thermal stabilization of the well-dispersed suspension at a temperature around 5°C is then carried out to delay the coagulation when adding the coagulant, thus providing time for casting.

Acetic anhydride is used as the coagulant agent. Since it is very sensitive to water, it has to be mixed with a co-solvent that helps to increase the miscibility of acetic anhydride in water and slow down the hydrolysis kinetics of acetic anhydride.

The temperature has to be set to a desired one for the same reason as set forth in the thermal stabilization stage.

The blend of coagulant and its co-solvent is added to the suspension while mixing. This mixing should be adapted to avoid the creation of air bubbles, for example, it can be ensured mechanically by a rotating blade whose design depends on the viscosity of the suspension. It is also very important to reach an homogeneous distribution of the coagulant within the entire volume of the suspension to further obtain a uniform coagulation.

Preferably casting takes place once the coagulant is mixed to the suspension and before coagulation, the suspension being cast in a non-porous mould in which coagulation occurs.

Once the body is coagulated, it is necessary to dry and de-mould it. It is preferable to first start drying the body in the mould in order to strengthen it and then to de-mould it after. If the drying is done directly in the mould, the mould can be designed to prevent any stresses or cracks. If de-moulding is done first, the coagulated body has to be strengthened to avoid any deformations.

Once again the drying has to be carried out under controlled atmospheres (temperature and humidity) to avoid cracking of the body.

The dried compacts can be further post-compacted by cold isostatic pressing at a pressure of 2,000 bars.

Tiron (4,5-Dihydroxy-m-benzenedisulfonic Acid, Disodium Salt) can be used in place of PBTC salt to achieve similar results.

The final sintering stage will give the final properties to the body. The sintering process can be as simple as natural sintering.

The invention can be carried out in various ways and one method of synthesizing the nano metric composite is a method for producing a ceramic component will now be described by way of example and with reference to the accompanying drawings in which :
Figure 1 is a flow diagram of the method of synthesizing a nano metric composite;
Figure 2 is a graph showing that without the presence of PAA the deagglomeration of calcite into elementary particles if not possible.
Figure 3 is a diagrammatic representation of the process
Figure 4 is a flow diagram showing how the nano metric composite produced by the method described with relation to Figure 1 can be employed to produce a ceramic component.

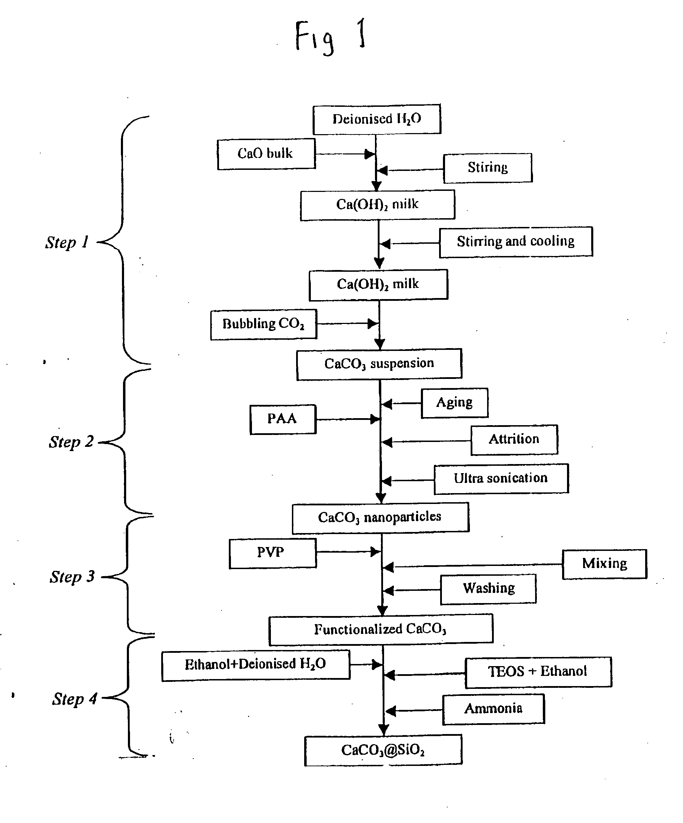

In Figure 1 which is a flow diagram of the method of synthesising a nano metric component in step 1 specially prepared lime milk is precisely adjusted at a temperature of close to 20°C. CO₂ gas is then blown by bubbling into the lime milk from the bottom of the beaker with vigorous mechanical stirring (700 rpm). The pH value electrical conductivity during the reaction in solution is measured on-line. When the pH value reaches 7.5 and, at the same time, the electric conductivity shows a sharp decrease and a further sudden increase, the reaction is completed, and the CO₂ flow is stopped. The precipitated calcite suspension is then continuously stirred (400 rpm) for ageing.

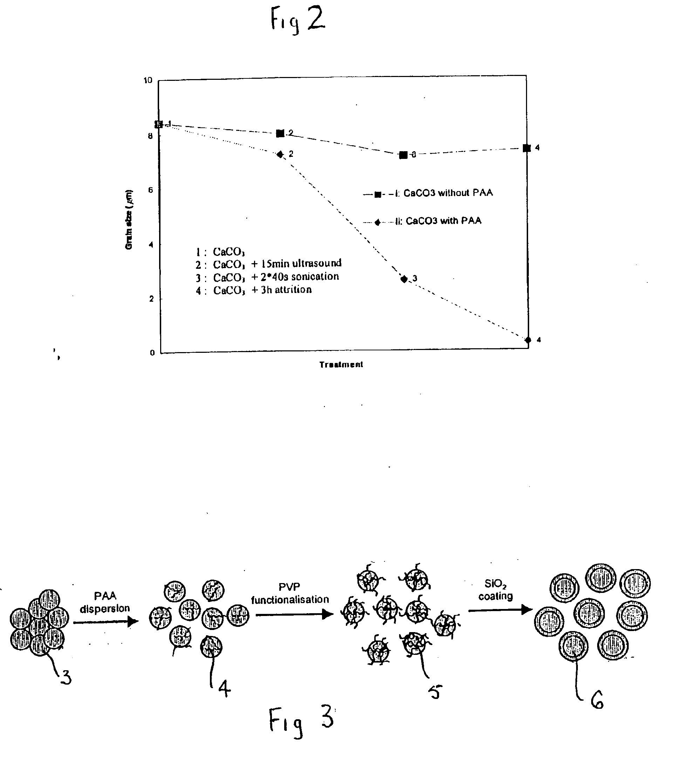

In Step 2 the PAA organic additive is added into the CaCO₃ suspension twenty four hours after the carbonation process is completed. Its influence on the particle distribution has been examined using a laser granulometer (Malvern Mastersizer 2000). Figure 2 shows that without the presence of PAA the de-agregation of calcite into elementary particles is not possible irrespective of the applied treatment, sonication or attrition, (i.e. D₉₀ is high in comparison with the size of elementary nanoparticles). On the contrary, the addition of PAA may considerably help the de-agregation of calcite conducting to an almost monodisperse suspension (after 3h of attrition D₉₀ drops down to 0.3 µm and D₅₀ < 0.15 µm). Thus, it appears that PAA is a good dispersant for nanometric calcite. In the optimized process, the calcite powder is milled by attrition for 3 hours in the presence of PAA dispersent before being functionalised with PVP in Step 3.

In Step 3, PVP is dissolved in the calcite nanoparticle suspension obtained in Step 2 using ultrasounds. Subsequently, the so-obtained suspension is stirred at room temperature for 7 or more days to reach the adsorption equilibrium of PVP on the previously PAA-dispersed calcite particles. The resulting double surfactant functionalized calcite particles are collected by centrifugation and washed with deionised water for 3 - 4 times to remove the un-adsorbed PVP. These functionalized particles can be easily re-dispersed in ethanol.

The process is shown diagrammatically in Figure 3 in which the (CaCO₃) suspension is indicated by reference numeral 3, the PAA dispersion by reference numeral 4, the PVP functionalisation by reference numeral 5 and the SiO₂ coating by reference numeral 6.

In Step 4, the heterogeneous nucleation-growth process with a sol-gel reaction is used to coat the calcite nanoparticles with silica. Firstly, the PAA and PVP functionalized calcite particles are mixed with ethanol in a Teflon beaker in order to eliminate the nucleation and growth of SiO₂ on the beaker wall during silica shell formation. Secondly, a TEOS solution in ethanol is carefully added into the suspension step by step. The amounts of the added TEOS are calculated based on the surface area of calcite particles and the desired shell thickness. Thereafter, the silica coating is initiated by injecting water and ammonia into the calcite TEOS colloidal suspension under vigorous stirring. The so-obtained suspension is continuously stirred at room temperature for 24 hours. To avoid formation of free silica spheres, it is necessary to add the TEOS solution in two stages. 10 wt.% of TEOS solution are initially added and the remaining 90 wt.% is then introduced 4 hours after the injection of water and ammonia. The combination of the good dispersion of initial calcite cores due to PAA, together with the specific affinity for the PVP allows monodisperse core-shell CaCO₃-SiO₂ nanopartricles to be obtained at the end of the synthesis process. These core-shell nanoparticles are collected by centrifugation, washed with deionised water and finally re-dispersed in water. The so-called aqueous suspension of isolated CaCO₃-SiO₂ nanoparticles are then ready to be introduced in the concentrated suspensions before DCC to serve as sintering additives.

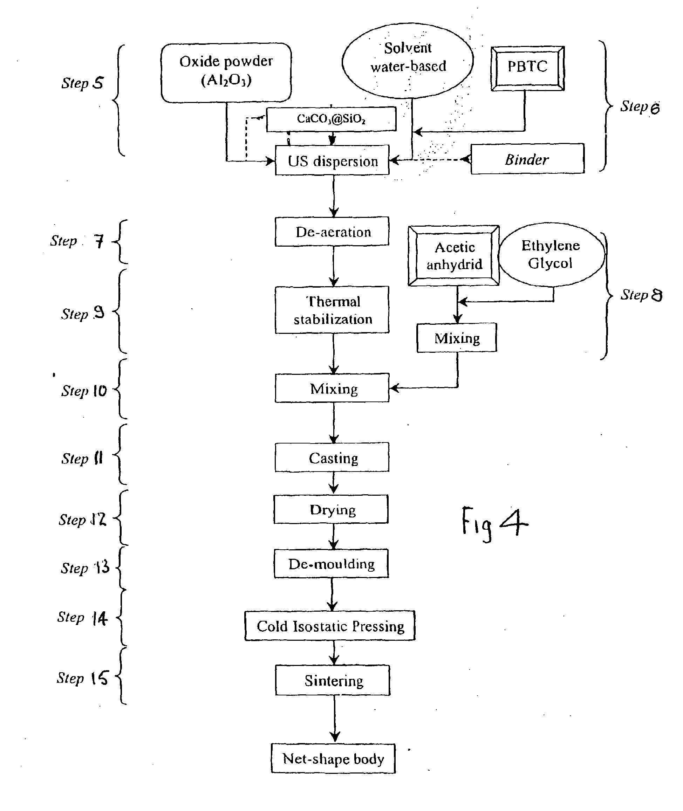

The nano metric composite which has a core and shell structure synthesized by the method shown in Figure 1 can be used in any method for producing a ceramic component, for example, as in the method shown in EP-A-1529 764 and this method, using alpha alumina nanopowder, is shown in Figure 4.

The steps 1 to 4 are carried out to provide the composite which has isometric calcite cores and shells.

The fifth step therefore comprises preparing a concentrated suspension of the powder and the isometric cores with their shells, for example 100 ml of suspension with a solid loading of 58 vol.% of alumina. In the case of alumina powder AKP30 from Sumitomo, the maximum solid loading is 58 vol.%. Such a solid loading is practically the maximum which can be used with an alumina powder of diameter close to 100 mm (over 58 vol.%, the viscosity would be too high to get a good de-aeration of concentrated suspension). The weight of the alumina powder necessary to be added is then equal to 230.84 g, which also corresponds to a surface of 1615.9 m². The optimum quantity of dispersant (i.e. the one conducting to the minimum viscosity) has been determined to be equivalent to 10⁻⁶ mol of 2-phosphonobutane-1,2,4-tricarboxylic acid (PBTC) per square meter of alumina powder surface. Actually, PBTC is introduced as an ammonium salt whose molar mass is equal to 338 g. A quantity of 0.546 g of PBTC-NH₄ is then dissolved in 42 ml of demineralised water prior to the addition of the alumina powder.

Since 58 vol.% of solid is a quite high solid loading, it is preferable to add the alumina powder in two stages. 40 vol.% are initially added and the sixth step described here below is applied. The remaining 18 vol.% of alumina powder is then introduced and again the sixth step is applied.

The total weight of solid dispersants and coagulants is less than 2% of the total weight of solids.

The sixth step comprises using an ultrasonic treatment for the deagglomeration of the alumina powder. The ultrasonic energy has to be high enough (700 Watts) to break strong agglomerates. To prevent overheating of the suspension from the ultrasonic energy, 1 second pulses are applied every three seconds over a duration of 2 minutes. A cooling system may also contribute to reduce the heating.

The seventh step comprises the de-aeration of the concentrated suspension which can be done in a chamber under a vacuum below 50 mbars.

The eighth step comprises preparing a mixture of acetic anhydride (coagulant) and ethylene glycol (co-solvent) or, alternatively, polyethylene glycol. The mixture can be used in the following proportions in volume with respect to composition: 1/8 of acetic anhydride and 7/8 of ethylene glycol or polyethylene glycol.

The ninth step consists of cooling the temperature of the concentrated suspension and the mixture of coagulant and co-solvent down to 5°C.

The tenth step comprises mixing the 100 ml of concentrated suspension with 8 ml of the mixture of coagulant and co-solvent under mechanical agitation with a blade rotating at few rpm to prevent from cavitation (creation of air bubbles).

The eleventh step comprises casting into a non-porous mould, for example, of silicon, latex or Teflon. Once cast the coagulation proceeds at room temperature in less than five minutes. Non-porous rigid and/or flexible moulds are used (lubricants such as Vaseline, Teflon or high purity oil can be used to aid removal of part from the mould).

The twelfth step comprises drying the three dimensional wet body directly inside the mould. The drying temperature and the humidity are adjusted depending on the shape and size of the part. Typically, an increase of the temperature and hygrometry inhibits the creation of cracks, but both have to be adapted depending on the size and shape of the part of to be dried.

The thirteenth step comprises de-moulding the dried green part.

The fourteenth step comprises of cold isostatic pressing (CIP) the dried green part at 2,000 bars pressure using, for instance, latex or silicone-based resins as the surrounding capsule.

Green densities obtained are above 60% of theoretical density. A cold isostatic pressing (CIP) stage can be used owing to the mobility of the grains because of the specific system used, for example good flow of grains enable formation of a more dense compact.

The fifteenth step comprises sintering the part to a density close to the theoretical one by applying a natural sintering at 1600 ° C for two hours.

The main benefits of this process are the ability to produce ceramic components requiring minimal machining once sintered as well as the production of ceramic shapes previously unobtainable with current manufacturing processes. Compared to a classical DCC process using enzymes (Gauckler), it is very fast since a homogeneously coagulated body can be obtained within 5 minutes. In addition, the core-shell nanoparticles abandoned as sintering additives promote a higher reactivity during sintering and a more homogeneous densified body or material.

## Claims

1. A method of synthesising a nano metric composite which has a core and shell structure and which includes preparing isometric metal oxide cores with an average diameter of less than 100 nm by a growth process via a liquid route, applying a double surfactant method which includes a first surfactant to obtain mono dispersal of the metal oxide cores and then using a second surfactant to prepare the surface of the metal oxide cores and grafting a shell on each of said cores.

2. A method as claimed in claim 1 which includes preparing isometric calcite cores via the liquid route and which includes a heterogeneous nucleation growth process in a Ca(OH)₂ - H₂O - CO₂ reaction system, and using polyacrylic acid (PAA) as a first surfactant to obtain monodispersal of the calcite nano particles; using polyvinylpyrrolidone (PVP) as a second surfactant, to improve the affinity between the core and the shell and then forming silica coatings on the calcite cores by the controlled hydrolysis and poly-condensation of tetraethylorthosilicate (TEOS) in a mixed solution of water, ammonia and ethanol, to form a shell on the core.

3. A method of producing a ceramic component which includes synthesising a nano metric composite which has a core and shell structure and which includes preparing isometric metal oxide cores with an average diameter of less than 100 nm by a growth process via a liquid route, applying a double surfactant method which includes a first surfactant to obtain mono dispersal of the metal oxide cores and then using a second surfactant to prepare the surface of the metal oxide cores and grafting a shell on each of said cores dispersing the coated metal oxide cores in water with alpha-alumina nanopowder whose diameter is above 100 nm in water, using 2-phosphonobutane-1,2,4-tricarboxylic acid (PBTC) or 4,5-Dihydroxy-m-benzenedisulfonic Acid, Disodium Salt (Tiron^{™}) as dispersant, adding the silica made by the method as set forth in claim 1, shifting the pH towards the isoelectric point (IEP) by adding a mixture of acetic anhydride and ethylene glycol, or polyethylene glycol, drying in a controlled atmosphere (humidity, temperature) and post compacting using cold isostatic pressing and sintering the three-dimensional structure thus formed.

4. A method as claimed in claim 3 which includes preparing isometric calcite cores via the liquid route and which includes dispersing the coated metal oxide cores in water with alpha-alumina nanopowder whose diameter is above 100 nm in water, using 2-phosphonobutane-1,2,4-tricarboxylic acid (PBTC) or 4,5-Dihydroxy-m-benzenedisulfonic Acid, Disodium Salt (Tiron^{™}) as dispersant, adding the silica made by the method as set forth in claim 1, shifting the pH towards the isoelectric point (IEP) by adding a mixture of acetic anhydride and ethylene glycol, or polyethylene glycol, drying in a controlled atmosphere (humidity, temperature) and post compacting using cold isostatic pressing and sintering the three-dimensional structure thus formed for dispensing in water with the said alpha-alumina nanopowder.

5. A method as claimed in claim 4 in which the alpha-alumina nanopowder is an oxide powder with a metal cation, able to exhibit a strong adsorption of PBTC molecules, for example demineralised, high purity and/or sterile water.

6. A method as claimed in claim 4 or claim 5 in which the PBTC is first mixed to water and thereafter the alumina powder is added.

7. A method as claimed in any one of preceding claims 4 to 6 in which the alumina powder is added in several stages with an ultrasonic (US) treatment between each addition stage.

8. A method as claimed in claim 7 in which a de-aeration stage under vacuum is carried out to remove air bubbles after ultrasonic treatments.

9. A method as claimed in claim any one of preceding claims 3 to 8 in which a binder is added after dispersion.

10. A method as claimed in any one of preceding claims 3 to 9 which includes preparing the isometric calcite cores from calcite nanoparticles via a liquid route and which includes a heterogeneous nucleation growth growth process in a Ca(OH)₂ - H₂O - CO₂ reaction system, and using polyacrylic acid (PAA) as a first surfactant to obtain monodispersal of the calcite nano particles; using polyvinylpyrrolidone (PVP) as a second surfactant, to improve the affinity between the core and the shell and then forming silica coatings on the calcite cores by the controlled hydrolysis and poly-condensation of tetraethylorthosilicate (TEOS) in a mixed solution of water, ammonia and ethanol, to form a shell on the core.

11. A method as set forth in any one of preceding claims 3 to 10 in which the core nanoparticles are between 20 and 50 mm in diameter and the alumina nanoparticles are from 5 to 100 mm in diameter.
